# EUROPÄISCHE PATENTSCHRIFT

(11) **EP 2 946 820 B1**
(45) Veröffentlichungstag und Bekanntmachung des Hinweises auf die Patenterteilung: **18.06.2025**
(21) Anmeldenummer: 14169055.2
(22) Anmeldetag: 20.05.2014
(51) Int. Cl.: B01D 1/22, B01D 1/28, B01D 3/02, B01D 3/08, B01D 3/10, B01D 3/42

(54) **VERFAHREN ZUM BETRIEB EINES VERDAMPFUNGSSYSTEMS UND VERDAMPFUNGSSYSTEM**
METHOD FOR OPERATING AN EVAPORATION SYSTEM AND EVAPORATION SYSTEM
PROCÉDÉ DE FONCTIONNEMENT D'UN DISPOSITIF D'ÉVAPORATION ET SYSTÈME D'ÉVAPORATION

(43) Veröffentlichungstag der Anmeldung: 25.11.2015
(73) Patentinhaber: Büchi Labortechnik AG, 9230 Flawil (CH)
(72) Erfinder: Wagner, Matthias, 9242 Oberuzwil (CH)
(74) Vertreter: Hepp Wenger Ryffel AG

(56) Entgegenhaltungen:
- EP-A2- 0 236 813
- CH-A5- 681 279
- DE-A1- 10 103 441
- DE-A1- 4 430 839
- DE-U1- 202011 106 544
- US-B1- 6 303 006

## Beschreibung

Die Erfindung betrifft ein Verfahren zum Betrieb eines Verdampfungssystems sowie ein Verdampfungssystem und einem Deckel gemäss den Oberbegriffen der unabhängigen Ansprüche.

Destillationsverfahren und Verdampfungssysteme kommen zum Eindampfen von Stoffen, Stoffgemischen oder Medien sowie zum Destillieren/Verdampfen von Stoffen, Stoffgemischen oder Medien zum Einsatz. Da das Verdampfen/Destillieren bei Atmosphärendruck und damit hohen Temperaturen schädliche Auswirkungen auf zu verdampfenden Medien haben kann und diverse Medien erst bei sehr hohen Temperaturen verdampfen, werden Systeme verwendet, an welche ein Unterdruck angelegt werden kann. Anlegen eines Unterdrucks setzt den Siedepunkt eines Mediums herab und das Verdampfen/Destillieren bei niedrigeren Temperaturen als vergleichsweise bei Atmosphärendruck ist möglich. Dabei werden insbesondere Rotationsverdampfer verwendet. Rotationsverdampfer und Verfahren zum automatisierten Destillieren sind bekannt. Dabei steuert während dem Destillationsprozess ein Regler den angesetzten Unterdruck und passt diesen dem gewünschten Siedepunkt an. Ein solches Verfahren ist beispielsweise in DE 203 00 046 U1 offenbart.

Ferner sind Temperatursensoren angeordnet am Eingang und Ausgang eines Kühlers bekannt, wobei aus der Temperaturdifferenz und der Flussrate des Kühlmechanismus die Menge des kondensierten Destillats berechnet wird. Des Weiteren ermöglicht die Regelung des Heizers und des Drucks im System eine optimale Auslastung des Kühlers. Es erfolgt eine Anpassung auf statische Grössen bei optimalen Bedingungen. Üblicherweise wird eine Destillation erst bei Erreichen dieser optimalen Bedingungen gestartet. DE 10 2008 051 364 B4 offenbart ein solches System.

DE 101 03 441 A1 beschreibt ein Verfahren sowie eine Vorrichtung zur Synthese von lösemittelhaltigen Stoffgemischen unter Anwendung einer Vakuumdestillation. In dem Verfahren wird das Stoffgemisch auf eine vorbestimmte, nicht zu überschreitende Destillationstemperatur gebracht. Der Systemdruck wird ausgehend von einem anfänglichen Umgebungsdruck iterativ in diskreten vorbestimmten Zeitabschnitten in den Bereich des zur Destillationstemperatur gehörenden Siededrucks schrittweise abgesenkt.

Es ist daher die Aufgabe der Erfindung, die Nachteile des Standes der Technik zu überwinden. Insbesondere soll ein energieeffizientes, energiesparendes und kostengünstiges Verfahren sowie ein entsprechendes Verdampfungssystem zur Verfügung gestellt werden.

Diese Aufgabe wird durch die in den unabhängigen Patentansprüchen definierten Merkmale gelöst.

Die Erfindung betrifft ein Verfahren zum Betrieb eines Verdampfungssystems, insbesondere eines Rotationsverdampfers, umfassend die Schritte
- Bereitstellen eines zu verdampfenden Mediums in einem Behälter,
- Bereitstellen einer Heizvorrichtung zum Erwärmen des zu verdampfenden Mediums,
- Bereitstellen einer Druckkontrollvorrichtung zum Erfassen und Einstellen eines Druckes im Behälter,
- Bereitstellen einer Kühlvorrichtung zum Kondensieren von verdampften Medien,
- Erfassen einer Temperatur der Heizvorrichtung und einer Temperatur der Kühlvorrichtung.

Dabei sind die folgenden Schritte zusätzlich umfasst:
- Erfassen des Druckes im Behälter,
- Einstellen des Druckes im Behälter derart, dass das Medium bei einer Anfangstemperatur, die um eine vorbestimmte Temperaturdifferenz (ΔT) grösser als die Temperatur der Kühlvorrichtung ist, verdampft und vorzugsweise an der Kühlvorrichtung (4) kondensiert,
- Einstellen der Temperatur der Heizvorrichtung derart, dass die Temperatur der Heizvorrichtung gleich der Anfangstemperatur ist,
- anschliessendes Einstellen der Temperatur der Heizvorrichtung auf eine vorbestimmte Dauertemperatur bei gleichzeitigem Nachführen des Druckes entsprechend einer Siedekurve des Mediums,
- wobei der Druck (P) kontinuierlich erfasst und die Temperatur (Tx) der Heizvorrichtung kontinuierlich entsprechend der Siedekurve eingestellt wird und/oder
- wobei die Temperatur (Tx) der Heizvorrichtung kontinuierlich erfasst und der Druck (P) entsprechend der Siedekurve kontinuierlich eingestellt werden,
- wobei kontinuierlich verdampft und kondensiert wird.

Die vorbestimmte Temperaturdifferenz charakterisiert eine Temperaturdifferenz zwischen der Temperatur der Kühlvorrichtung und der Temperatur der Heizvorrichtung und somit auch der Temperatur des zu verdampfenden Mediums, bei welcher eine effiziente Kondensation und damit Rückgewinnung eines in die Gasphase übergegangenen Mediums erreicht wird.

Die Dauertemperatur ist diejenige Temperatur der Heizvorrichtung, bei welcher ein Verdampfen routinemässig stattfindet, und ist abhängig vom zu verdampfenden Medium bzw. von dem im Medium enthaltenen Stoff. Das verwendete Medium kann ein einzelner Stoff oder ein Stoffgemisch sein umfassend ein Lösungsmittel oder Lösungsmittelgemisch.

Der Dauerdruck ist derjenige Druck, bei welchem ein Verdampfen routinemässig stattfindet, und ist abhängig vom zu verdampfenden Medium bzw. von dem im Medium enthaltenen Stoff. Dauertemperaturen und Dauerdrucke sind dem Fachmann für zu verdampfende Medien sowie Inhaltsstoffe bekannt.

Die Kühlvorrichtung ist zum Kondensieren von verdampften Medien bereitgestellt. Auf diese Weise kann das verdampfte Medium an der Kühlvorrichtung, z.B. einem Rücklaufkühler, kondensieren und ausgeleitet werden, insbesondere in einen Auffangbehälter abtropfen und/oder abfliessen. Dies dient der Rückgewinnung von Lösungsmitteln oder der Gewinnung von Destillaten.

Das vorgenannte Verfahren erlaubt, dass der Verdampfungs- und Destillationsvorgang nicht erst mit Erreichen einer Dauertemperatur sondern bereits bei einer niedrigeren Temperatur gestartet werden kann. Somit ist ein energieeffizientes, kostengünstiges und zeitsparendes Verdampfungs- und/oder Destillationsverfahren möglich.

Selbstverständlich kann das Verfahren mit allen gängigen Verdampfungssystemen, insbesondere Rotationsverdampfern, Glasrohr-Verdampfern, Schüttelverdampfern, Parallel-Verdampfern oder Vortex-Verdampfern, ausgeführt werden.

Der Druck kann in Abhängigkeit von der erfassten Temperatur und der Siedekurve des zu verdampfenden Mediums eingestellt werden. Ebenso kann die Temperatur in Abhängigkeit eines erfassten Druckes und der Siedekurve des zu verdampfenden Mediums eingestellt werden. Auf diese Weise können die Prozessparameter wie z.B. der Druck und/oder die Temperatur entlang der Siedekurve des zu verdampfenden Mediums eingestellt werden, so dass jederzeit optimale Bedingungen für das Verdampfen und Destillieren vorherrschen.

System- und/oder umgebungsbedingte Temperatur- und/oder Druckschwankungen lassen sich kompensieren, was ein energieeffizientes und kosteneffizientes Verdampfen gewährleistet.

Der Siedepunkt (auch Siedetemperatur genannt) ist die Temperatur, bei der die flüssige und die gasförmige Phase eines Mediums im thermodynamischen Gleichgewicht stehen, d.h. bei der der Dampfdruck des Mediums gleich dem auf ihm lastenden äusseren Druck ist. Die Temperaturänderung des Dampfdruckes wird durch die Clausius-Clapeyron-Gleichung beschrieben. Da der Dampfdruck eines Mediums mit der Temperatur stark ansteigt, lässt sich bei Anwendung von Unterdruck der Siedepunkt erniedrigen und das Medium bei einem verminderten Druck zum Sieden bringen. Während unterhalb des Siedepunkts die Temperatur des Mediums bei entsprechender thermischer Energiezufuhr stetig steigt, bleibt sie am Siedepunkt trotz weiterer Energiezufuhr solange stehen, bis der flüssige Anteil des Mediums verdampft ist. Die zugeführte Energie wird ab dem Siedepunkt nur noch zur Verdampfung des Mediums verwendet. Die Siedekurve (P/T-Kurve) eines Mediums beschreibt eine Reihe an Siedepunkten eines zu verdampfenden Mediums in Abhängigkeit des Druckes bzw. der Temperatur.

Die Temperatur der Kühlvorrichtung kann auf eine Temperatur eingestellt werden, die wenigstens um die zuvor definierte Temperaturdifferenz kleiner als die Temperatur der Heizvorrichtung ist. Üblicherweise wird die Temperatur der Kühlvorrichtung niedriger, insbesondere 20 °C niedriger, als die Siedetemperatur eines zu verdampfenden Mediums eingestellt. Auf diese Weise ist die Rückgewinnung des verdampften Mediums verbessert.

Insbesondere bei Verwendung eines Flüssigkeitskühlers kann die Temperatur der eingehenden und/oder der ausgehenden Kühlflüssigkeit mittels eines oder mehrerer am Eingang und/oder am Ausgang der Kühlvorrichtung angeordneter Temperatursensoren erfasst werden. Über die Temperaturdifferenz aus den am Eingang und am Ausgang der Kühlvorrichtung gemessenen Temperaturen kann die Auslastung des Systems bestimmt werden. Auf diese Weise können Temperaturwerte der Kühlvorrichtung für den Destillationsprozess berücksichtigt werden und Prozessparameter wie die Temperatur der Heizvorrichtung und/oder der Druck nachgestellt werden. Beispielhafte Kühlvorrichtungen können Dimroth-Kühler, Intensiv-Kühler, Birnenkühler, Kugelkühler, Schlangenkühler, Liebigkühler und einfache Fingerkühler sein.

Erfindungsgemäss können der Druck oder die Temperatur kontinuierlich erfasst werden und die Temperatur oder der Druck kontinuierlich entsprechend der Siedekurve eingestellt werden. Beispielsweise wird mit in Betriebnahme des Verdampfungssystems das Verdampfen gestartet und die Temperatur oder der Druck anhand der erfassten korrespondierenden Parameter eingestellt. Auf diese Weise kann bereits bei niedrigen Temperaturen, welche unterhalb der Dauertemperatur liegen, also bei Anlaufen der Heizvorrichtung über einen Temperaturbereich verdampft werden.

Der Druck und/oder die Temperatur können kontinuierlich bis zum Erreichen des Dauerdrucks und/oder der Dauertemperatur eingestellt werden. Auf diese Weise kann das Verdampfen bereits beim Einschalten des Verdampfungssystems oder nach einer kurzen Zeitspanne erfolgen und kontinuierlich bis zum Erreichen des Dauerdrucks und/oder der Dauertemperatur angepasst werden. Vorteilhaft ist, dass dabei die Temperatur und/oder der Druck im Behälter entsprechend einer vorgegebenen Siedekurve fortwährend nachgeregelt werden und sich damit Ausfallzeiten des Verdampfungssystems beispielsweise zum Aufheizen des Mediums vermeiden oder zumindest reduzieren lassen.

Die Temperatur der Kühlvorrichtung kann kontinuierlich erfasst und entsprechend wenigstens um die definierte Temperaturdifferenz kleiner als die Temperatur der Heizvorrichtung eingestellt werden. Die Temperatur der Kühlvorrichtung kann auch konstant um eine anfängliche Temperatur gehalten werden, welche der Anfangstemperatur vermindert um die definierte Temperaturdifferenz entspricht. Auf diese Weise ist die Rückgewinnung des verdampften Mediums verbessert.

Der Druck kann geregelt werden. Selbstverständlich kann auch die Temperatur geregelt werden. Effektiv ist eine Regelung und/oder Steuerung umfassend die Grössen Druck und/oder Temperatur bereitgestellt. Weitere Grössen, die für die Regelung und/oder Steuerung der Verdampfung berücksichtigt werden können, umfassen die Temperatur der Kühlvorrichtung, insbesondere gemessen am Ein- und Ausgang eines Rücklaufkühlers, die Temperatur des zu verdampfenden Mediums, die Temperatur des Dampfes, die Rotationsgeschwindigkeit des Behälters und die Dauer des Verdampfens.

Des Weiteren betrifft die Erfindung ein Verdampfungssystem, insbesondere einen Rotationsverdampfer, umfassend
- einen Behälter zur Aufnahme eines zu verdampfenden Mediums,
- eine Heizvorrichtung zum Erwärmen des zu verdampfenden Mediums,
- eine Druckkontrollvorrichtung zum Erfassen und Einstellen eines definierten Druckes im Behälter,
- eine Kühlvorrichtung, insbesondere ein Flüssigkeitskühler, zum Kondensieren von verdampften Medien,
- eine Temperaturerfassungseinrichtung zum Erfassen einer Temperatur der Heizvorrichtung,
- eine Temperaturerfassungseinrichtung zum Erfassen einer Temperatur der Kühlvorrichtung,
- eine Steuerung zum Einstellen der Temperatur der Heizvorrichtung und des Druckes in Abhängigkeit einer Siedekurve des zu verdampfenden Mediums.

Dabei ist die Steuerung derart ausgestaltet, dass
- der Druck im Behälter erfasst wird,
- der Druck im Behälter derart eingestellt wird, dass das Medium bei einer Anfangstemperatur, die um eine vorbestimmte Temperaturdifferenz grösser als die Temperatur der Kühlvorrichtung ist, verdampft und vorzugsweise an der Kühlvorrichtung kondensiert,
- die Temperatur der Heizvorrichtung derart eingestellt wird, dass die Temperatur der Heizvorrichtung gleich der Anfangstemperatur ist,
- die Temperatur der Heizvorrichtung nach Erreichen der Anfangstemperatur und einem Anfangsdruck auf eine vorbestimmte Dauertemperatur bei gleichzeitigem Nachführen des Druckes entsprechend der Siedekurve des Mediums eingestellt wird,
- wobei der Druck (P) kontinuierlich erfasst und die Temperatur (Tx) der Heizvorrichtung kontinuierlich entsprechend der Siedekurve eingestellt wird und/oder
- wobei die Temperatur (Tx) der Heizvorrichtung kontinuierlich erfasst und der Druck (P) entsprechend der Siedekurve kontinuierlich eingestellt werden,
- wobei kontinuierlich verdampft und kondensiert wird.

Insbesondere ist das zuvor beschriebene Verfahren mit diesem Verdampfungssystem durchführbar. Daher wird der Verdampfungs- und Destillationsvorgang des Verdampfungssystems nicht erst mit Erreichen der Dauertemperatur sondern bereits bei einer niedrigeren Temperatur gestartet. Somit ist ein energieeffizientes, kostengünstiges und zeitsparendes Verdampfungs- und/oder Destillationsverfahren möglich.

Selbstverständlich kann das Verdampfungssystem ein Rotationsverdampfer, ein Glasrohr-Verdampfer, ein Schüttelverdampfer, ein Parallel-Verdampfer oder ein Vortex-Verdampfer sein.

Mittels der Kühlvorrichtung kann das verdampfte Medium kondensieren und ausgeleitet werden, insbesondere in einen Auffangbehälter abtropfen. Dies dient der Rückgewinnung von Lösungsmitteln oder der Gewinnung von Destillaten. Die Kühlvorrichtung kann beispielsweise ein Flüssigkeitskühler sein.

Die Temperaturerfassungseinrichtung zum Erfassen einer Temperatur der Kühlvorrichtung kann einen oder mehrere Temperatursensoren an der Kühlvorrichtung enthalten. Diese können insbesondere am Ein- und/oder Ausgang der Kühlvorrichtung, insbesondere eines Flüssigkeitskühler, angeordnet sein. Über die Temperaturdifferenz aus den am Eingang und am Ausgang der Kühlvorrichtung gemessenen Temperaturen kann die Auslastung des Systems bestimmt werden. Auf diese Weise können Temperaturwerte der Kühlvorrichtung für das Verdampfungs-/Destillationsverfahren berücksichtigt werden und Prozessparameter wie die Temperatur der Heizvorrichtung und/oder der Druck nachgestellt werden.

Die Druckkontrollvorrichtung zum Erfassen und Einstellen eines definierten Druckes im Behälter kann einen oder mehrere Drucksensoren aufweisen, welche im Behälter des Verdampfungssystems angeordnet sein können. Die Sensoren können aber auch ausserhalb des Behälters in einem mit dem Behälter fluidisch verbundenem Bereich des Verdampfungssystems angeordnet sein. Die damit ermittelten Werte können für die Regelung des Betriebs des Verdampfungssystems, beispielsweise für ein Nachstellen des Drucks, verwendet werden.

Im Verdampfungssystem können ein oder mehrere Temperatursensoren zum Erfassen der Temperatur des gasförmigen und/oder flüssigen Mediums angeordnet sein. Durch die ermittelten Werte kann die Temperatur des zu verdampfenden Mediums direkt überwacht und gegebenenfalls ein Nachstellen der Temperatur der Heizvorrichtung oder des Drucks im Behälter veranlasst werden.

Das Verdampfungssystem kann eine Steuerung umfassend eine Benutzerschnittstelle mit Eingabemöglichkeit aufweisen. Das Verdampfungssystem kann einen Speicher zur Aufnahme von Siedekurven verschiedener Medien und/oder anderer Verfahrensparameter aufweisen. Über die Benutzerschnittstelle können Siedekurven erstellt, gespeichert und ausgewählt werden und damit ein Verdampfen auf das zu verdampfende Medium angepasst werden. Die Benutzerschnittstelle kann zudem eine Kontrolleinheit mit Anzeigemöglichkeiten zum Verlauf des Verdampfens aufweisen. Weitere Parameter umfassen die Rotationsgeschwindigkeit des Behälters, die Temperatur der Kühlvorrichtung und die Dauer der Verdampfung, welche ebenfalls einstellbar sein können.

Ein weiterer nicht erfindungsgemässer Aspekt betrifft einen Deckel zum Abdecken eines Heizbades, insbesondere einer Heizvorrichtung eines Verdampfungssystems wie vorgängig erläutert, mit einem Griff und einem Deckelelement. Dabei definiert der Griff eine Standfläche, so dass eine Auflagefläche des Deckelelements in einer im Wesentlichen vertikalen Ausrichtung in einer Standposition auf einer Oberfläche abstellbar ist. Unter einer im Wesentlichen vertikalen Ausrichtung der Auflagefläche versteht sich hier und im Weiteren eine Ausrichtung, welche innerhalb einer Toleranz von ±30°, insbesondere ±20°, bevorzugt ±10° von der Senkrechten liegt. Auf diese Weise lässt sich der Deckel nach einem Abnehmen von einem Heizbad platzsparend abstellen und verstauen. Ein möglicher Kontakt und damit ein Verbrennen der Haut von Händen oder Armen eines Anwenders beim Abstellen des Deckels in einer vertikalen Standposition werden durch das zur Verfügungstellen eines Griffes und der Ausrichtung der Auflagefläche vermieden.

Das Deckelelement kann aus Metall, insbesondere Chromstahl, 1.4301 Stahl, 1.4306 Stahl, 1.4404 Stahl und 1.4462 Stahl, oder aus Kunststoff gefertigt sein. Der Griff kann aus Kunststoff, insbesondere PUR-Schaum BAYDUR 110^{®}, MF 152, Polybutyleneterephthalat (PBT) Pocan^{®}, und Polybutyleneterephthalat (PBT) TSG gefertigt sein. Auf diese Weise lassen sich vorteilhafte Eigenschaften hinsichtlich Isolation zwischen Deckelelement und Griff, Gewicht und Chemikalienbeständigkeit des Deckels einbringen.

Das Deckelelement kann eine Rinne zum Sammeln von Kondensat aufweisen. Dabei ist die Rinne bei in Standposition abgestelltem Deckel in einem der Oberfläche nahen Bereichs des Deckelelements angeordnet. Auf diese Weise wird ein Verunreinigen der Standfläche durch abtropfendes bzw. ablaufendes Kondensat vermieden.

Die Rinne kann derart angeordnet sein, dass sich diese beim Auflegen auf das Heizbad in das Heizbad entleert. Auf diese Weise wird das Kondensat zurück gewonnen und eine Verschmutzung der Oberfläche verhindert.

Ein nicht erfindungsgemässer Aspekt betrifft weiter ein Verdampfungssystem, insbesondere einen Rotationsverdampfer, umfassend ein Heizbad und einen Deckel mit einem Griff. Diese können wie vorgängig erläutert ausgestaltet sein. Dabei ist der Deckel auf dem Heizbad positionierbar. Der Griff definiert eine Standfläche, so dass eine Auflagefläche des Deckels in einer im Wesentlichen vertikalen Ausrichtung in einer Standposition auf einer Oberfläche abstellbar ist. Unter einer im Wesentlichen vertikalen Ausrichtung versteht sich hier und im Weiteren eine Ausrichtung wie vorgängig definiert. Durch Auflegen des Deckel bzw. dessen Auflagefläche auf dem Heizbad lässt sich ein Auskühlen des abgeschalteten Heizbades verzögern. So ist ein Energieeintrag, welcher zum Erreichen einer gewünschten Temperatur des Heizbades bei einem erneuten Starten des Verdampfungssystems aufgewendet werden muss, vermindert.

Die Erfindung wird im Folgenden anhand von Abbildungen exemplarischer Ausführungsbeispiele näher erläutert. Es zeigen:
- Figur 1:: Eine schematische Darstellung eines Verdampfungssystems,
- Figur 2:: Eine perspektivische Ansicht eines erfindungsgemässen Verdampfungssystems in der Form eines Rotationsverdampfers,
- Figur 3:: Siedekurven üblicher Lösungsmittel,
- Figur 4:: Ein nicht erfindungsgemässer Deckel zum Abdecken eines Heizbades in unterschiedlichen Ansichten.

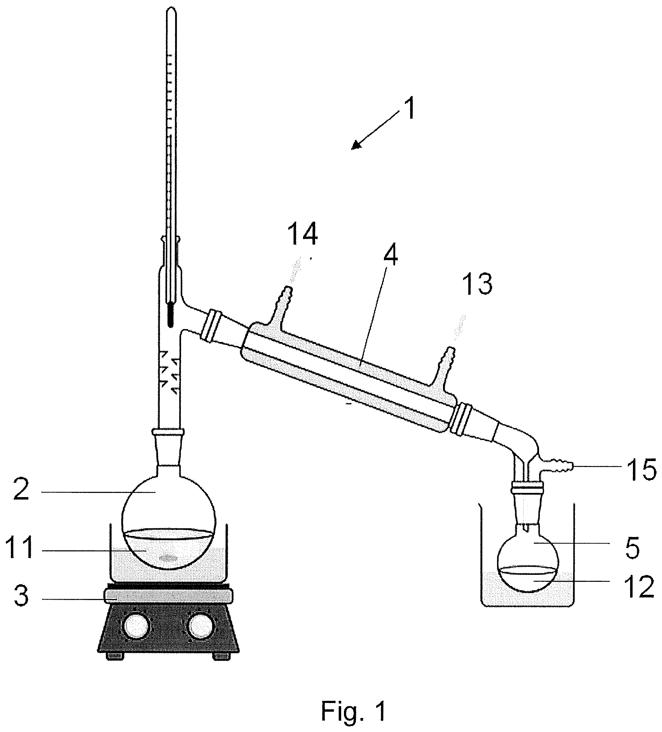

Figur 1 zeigt eine schematische Darstellung eines erfindungsgemässen Verdampfungssystems 1 umfassend einen Behälter 2 zur Aufnahme eines zu verdampfenden Mediums 11 und eine Heizvorrichtung 3 zum Erwärmen des zu verdampfenden Mediums 11. Mit Erreichen der Siedetemperatur des zu verdampfenden Mediums 11, welche abhängig von dem angelegten Druck ist, beginnt das Verdampfen desselben. Über die Gasphase gelangt das verdampfte Medium 11 in Kontakt mit der Kühlvorrichtung 4, welche eine niedrigere Temperatur besitzt als die Siedetemperatur des zu verdampfenden Mediums 11. Eine Kühlflüssigkeit wird durch einen Eingang 13 in die Kühlvorrichtung 4 eingeleitet und über einen Ausgang 14 herausgeleitet. Das Medium 11 kondensiert an der Kühlvorrichtung 4 und wird als Destillat 12 im Auffangbehälter 5 gesammelt. Der Druck im Behälter 2 wird mittels einer Pumpe, welche am Anschluss 15 angeschlossen werden kann, angelegt.

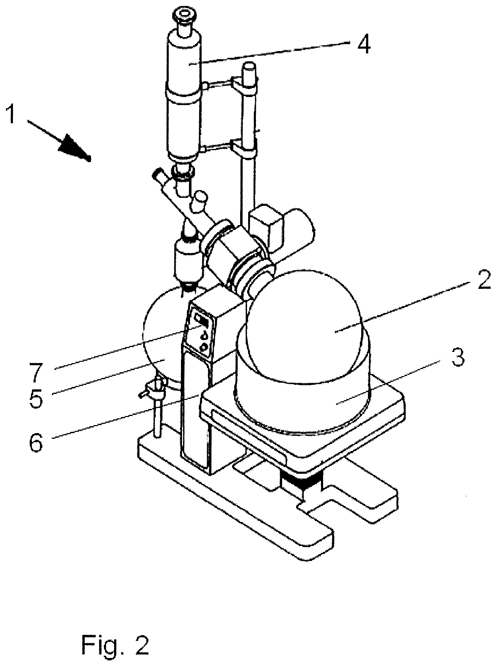

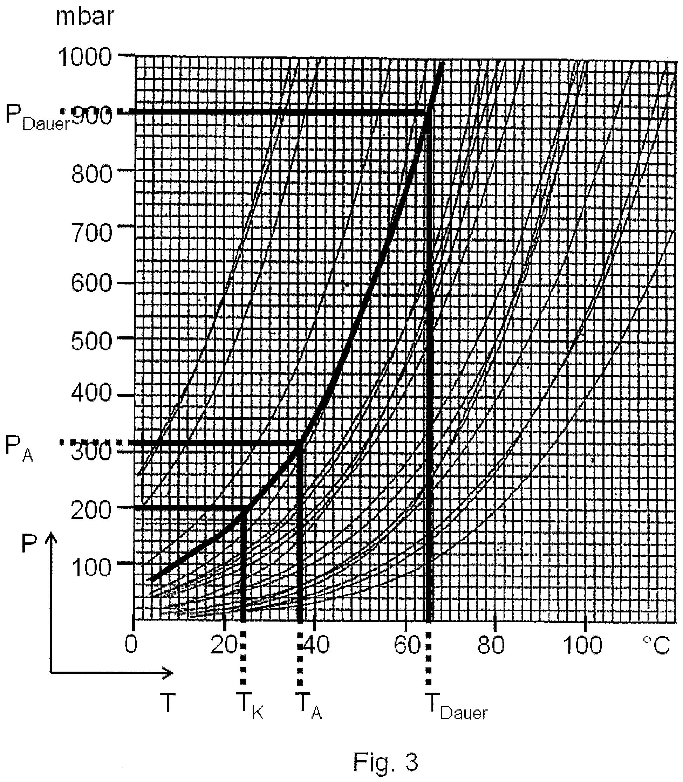

Figur 2 zeigt eine perspektivische Ansicht eines erfindungsgemässen Verdampfungssystems 1 in der Form eines Rotationsverdampfers. Das Verdampfungssystem 1 umfasst einen Behälter 2 zum Bereitstellen eines zu verdampfenden Mediums 11 (vgl. Fig. 1), eine Heizvorrichtung 3 zum Erhitzen des Behälters 2, eine Drucckontorollvorrichtung (nicht dargestellt) zum Einstellen eines Druckes P im Behälter 2, eine Kühlvorrichtung 4 zum Kondensieren von verdampften Medien, Temperatursensoren zum Erfassen der Temperatur T der Heizvorrichtung 3 und der Kühlvorrichtung 4 und eine Steuerung 6 mit einer Benutzerschnittstelle 7 zum Steuern der Temperatur T der Heizvorrichtung 3 und/oder des Drucken P in Abhängigkeit von dem zu verdampfenden Medium. Die Temperatur T und der Druck P werden durch eine Siedekurve (vgl. Fig. 3) des zu verdampfenden Mediums vorgegeben. Im Behälter 2 befindet sich ein zu verdampfendes Medium 11 (vgl. Fig. 1), welches einen Stoff oder eine Stoffgemisch sowie ein Lösungsmittel oder ein Lösungsmittelgemisch umfasst. Der Druck P im Behälter 2 wird erfasst. Der Druck P im Behälter 2 wird derart eingestellt, dass das Medium 11 bei einer Anfangstemperatur T_{A}, die um eine vorbestimmte Temperaturdifferenz ΔT grösser als die Temperatur T_{K} der Kühlvorrichtung ist, verdampft und an der Kühlvorrichtung 4 kondensiert. Die Temperatur T_{H} der Heizvorrichtung 3 wird derart eingestellt, dass die Temperatur T_{H} der Heizvorrichtung 3 gleich der Anfangstemperatur T_{A} ist. Die Temperatur T_{H} der Heizvorrichtung 3 wird auf eine vorbestimmte Dauertemperatur T_{Dauer} bei gleichzeitigem Nachführen des Druckes P entsprechend der Siedekurve des Mediums 11 eingestellt.

Des Weiteren umfasst das Verdampfungssystem 1 einen Auffangbehälter 5. Die Kühlvorrichtung 4 weist eine niedrigere Temperatur entsprechende der definierten Temperaturdifferenz ΔT als die Heizvorrichtung 3 auf. Damit kondensiert der verdampfte Anteil des Mediums an der Kühlvorrichtung 4. Dieses Destillat 12 (vgl. Fig. 1) kann in den Auffangbehälter 5 abtropfen bzw. ausgeleitet werden.

Erfindungsgemäss kann der Druck P in Abgängigkeit von der erfassten Temperatur T und einer Siedekurve des zu verdampfenden Mediums und/oder die Temperatur T_{H} in Abhängigkeit von einem erfassten Druck P und einer Siedekurve des zu verdampfenden Mediums 11 eingestellt werden. Der Druck P wird in Abhängigkeit der erfassten Temperatur T_{H} der Heizvorrichtung 3 bis zum Erreichen einer Dauertemperatur T_{Dauer} und eines Dauerdrucks P_{Dauer} nachgeführt. Dabei ermöglicht die Steuerung 6 ein kontinuierliches Nachstellen des Drucks P und/oder der Temperatur T_{H} und somit ein kontinuierliches Verdampfen und Destillieren beginnend mit Erreichen der Anfangstemperatur T_{A} des Verdampfungssystems 1. An der Benutzerschnittstelle 7 werden Einstellungen vorgenommen und Siedekurven programmiert, abgelegt und/oder aufgerufen. Die Einstellungen umfassen neben Temperatur- und Druckeinstellung aufgrund der Siedkurven eines zu verdampfenden Mediums 11 Parameter wie z.B. eine Rotationsgeschwindigkeit des Behälters 2, die Temperatur der Kühlvorrichtung 4 und die Dauer der Verdampfung.

Figur 3 zeigt Siedekurven üblicher Lösungsmittel. Auf der Abszisse ist die Temperatur in °C aufgetragen. Auf der Ordinate ist der Druck in mbar aufgetragen. Das Auftragen von Siedetemperaturen bei korrespondierendem Umgebungsdruck ergibt eine Siedekurve eines zu verdampfenden Mediums 11 (vgl. Fig. 1) und veranschaulicht die Abhängigkeit von Temperatur und Umgebungsdruck P auf das Sieden bzw. Verdampfen eines Mediums 11. Üblicherweise erfordert eine geringe Temperatur einen geringen Druck P, sowie eine hohe Temperatur einen hohen Druck P. Alternativ erfordert ein geringer Druck P eine geringe Temperatur, um eine Heizvorrichtung 3 eines Verdampfungssystems 1 entsprechend eines Siedepunktes eines zu verdampfenden Mediums 11 einzustellen, sowie ein hoher Druck P erfordert eine hohe Temperatur T.

Bei sich ändernden Temperaturen, beispielsweise steigender Temperatur T_{H} der Heizvorrichtung 3 (vgl. Fig. 2), wird der Druck P entsprechend heraufgesetzt und damit das Verdampfungssystem auf eine vorgegebene Siedekurve angepasst. Für die Anpassung des Verdampfungssystems auf eine Siedekurve kann selbstverständlich auch die erfasste Temperatur des zu verdampfenden Mediums 11 in Kombination mit dem Druck P im Behälter 2 (vgl. Fig. 1) berücksichtigt werden und gleichermassen auf eine vorgegebene Siedekurve ein- bzw. nachgestellt werden.

Eine vordefinierte Temperaturdifferenz zwischen der Temperatur T_{K} der Kühlvorrichtung und der Temperatur T_{H} der Heizvorrichtung definiert eine Anfangstemperatur T_{A}, bei welcher ein Verdampfen und Destillieren ermöglicht ist.

Beispielhafte Lösungsmittel sind Acteon, Benzol, Chlorbenzol, 1,2-Dichlorethan, Dichlormethan, Diethylether, Dioxan, Essigsäure, Ethanol, Ehylacetat, Heptan, Hexan, Methanol, Pentan, n-Propylalkohol, Tetrachlorethylen, Toluol, Trichlorethylen, Trichlormethan, Wasser und Xylole. Das Verfahren ist dabei jedoch nicht auf diese Lösungsmittel oder Gemische von vorgenannten Lösungsmitteln beschränkt. Weitere gängige Lösungsmittel sind dem Fachmann bekannt.

Eine Dauertemperatur T_{Dauer} der Heizvorrichtung 3 (vgl. Fig. 1) ist abhängig von dem zu verdampfenden Medium und kann insbesondere Werte von Raumtemperatur bis 220 °C annehmen. Dauertemperaturen T_{Dauer} für den Betrieb eines Verdampfungssystems sind von dem zu verdampfenden Medium sowie den darin enthaltenen Inhaltsstoffen abhängig. Der Betrieb eines Verdampfungssystems bei herabgesenkter Dauertemperatur T_{Dauer} mit einem entsprechenden Dauerdruck P_{Dauer} ist schonender für das zu verdampfende Medium bzw. des Inhaltsstoffs. Des Weiteren gehen eine Reihe an Medien erst bei ausgesprochen hohen Temperaturen in die Gasphase über. Ein Herabsenken des Siedepunkts ist daher vorteilhaft. Übliche Dauertemperaturen T_{Dauer} und Dauerdrucke P_{Dauer} sind dem Fachmann bekannt.

Beispielhaft sind eine Temperatur T_{K} einer Kühlvorrichtung 4, eine Anfangstemperatur T_{A}, eine Dauertemperatur T_{Dauer}, ein Anfangsdruck P_{A} sowie ein Dauerdruck P_{Dauer} für eine optimale Verdampfung anhand eines exemplarischen Lösungsmittels in Figur 3 hervorgehoben.

Die Temperatur der Heizvorrichtung bzw. des Mediums, die Temperatur T_{K} der Kühlvorrichtung und der Druck im Behälter werden erfasst. Ausgehende von der erfassten Temperatur T_{K} der Kühlvorrichtung wird die Anfangstemperatur T_{A} bestimmt, so dass diese Anfangstemperatur T_{A} um eine vorbestimmte Temperaturdifferenz grösser als die Temperatur T_{K} der Kühlvorrichtung ist. Anhand dieser bestimmten Anfangstemperatur T_{A} und der dem zu verdampfenden Medium entsprechenden Siedekurve wird der Anfangsdruck P_{A} bestimmt. Der Druck im Behälter wird auf diesen Anfangsdruck P_{A} eingestellt. Die Temperatur der Heizvorrichtung wird derart eingestellt, dass die Temperatur der Heizvorrichtung gleich der Anfangstemperatur T_{A} ist, so dass das Medium verdampft und an der Kühlvorrichtung kondensiert. Anschliessend wird die Temperatur der Heizvorrichtung auf eine vorbestimmte Dauertemperatur T_{Dauer} bei gleichzeitigem Nachführen des Druckes bis zum Erreichen eine Dauerdrucks P_{Dauer} entsprechend einer Siedekurve des Medium eingestellt bzw. nachgeführt. Dabei wird kontinuierlich verdampft und kondensiert.

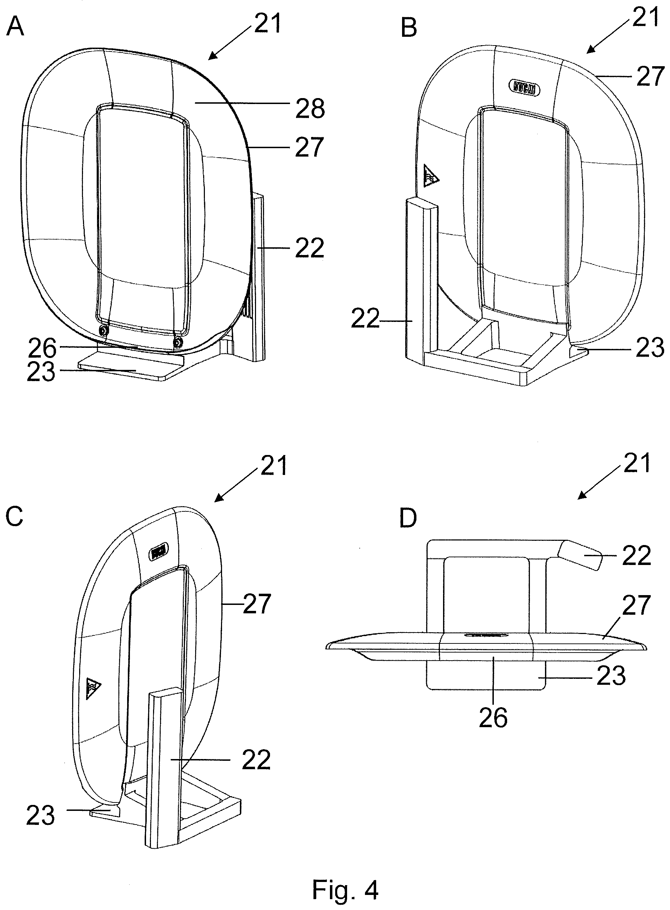

Figur 4 zeigt einen nicht erfindungsgemässen Deckel 21 zum Abdecken eines Heizbades in vier Ansichten, eine vorderseitige Darstellung (A), zwei rückseitige Darstellungen (B und D) und eine Darstellung von oben (D). Die weiteren Erläuterungen beziehen sich auf alle vier Darstellungen . Der erfindungsgemässe Deckel 21 umfasst einen Griff 22, eine Standfläche 23, eine Rinne 26 und ein Deckelement 27 mit einer Auflagefläche 28. Der Griff 22 definiert die Standfläche 23. Der Deckel 21 ist mittels der Standfläche 23 auf einer Oberfläche in einer Standposition abgestellt. Dabei ist das Deckelelement 27 mit seiner Auflagefläche 28 im Wesentlichen vertikal auf der Oberfläche ausgerichtet. Die Rinne 26 ist bei diesen in Standposition abgestelltem Deckel 21 in einem der Oberfläche nahen Bereich des Deckelelements 27, also unten, angeordnet und dient zum Sammeln von Kondensat. Die Rinne 26 ist derart angeordnet, dass sich diese beim Auflegen auf ein Heizbad in das Heizbad entleert. Das Deckelelement 27 ist bevorzugt aus Metall und der Griff 22 bevorzugt aus Kunststoff gefertigt gemäss der in der Beschreibung vorgängig angeführten Materialien.

## Patentansprüche

1. Verfahren zum Verdampfen und Kondensieren eines Mediums mit einem Verdampfungssystem (1), insbesondere einem Rotationsverdampfer, umfassend die Schritte
- Bereitstellen eines zu verdampfenden Mediums (11) in einem Behälter (2),
- Bereitstellen einer Heizvorrichtung (3) zum Erwärmen des zu verdampfenden Mediums (11),
- Bereitstellen einer Druckkontrollvorrichtung zum Erfassen und Einstellen eines Druckes (P) im Behälter (2),
- Bereitstellen einer Kühlvorrichtung (4) zum Kondensieren von verdampften Medien (11),
- Erfassen einer Temperatur (T_{H}) der Heizvorrichtung (3) und einer Temperatur (T_{K}) der Kühlvorrichtung (4),
- Erfassen des Druckes (P) im Behälter (2),
- Einstellen des Druckes (P) im Behälter (2) derart, dass das Medium (11) bei einer Anfangstemperatur (T_{A}), die um eine vorbestimmte Temperaturdifferenz (ΔT) grösser als die Temperatur (T_{K}) der Kühlvorrichtung (4) ist, verdampft und an der Kühlvorrichtung (4) kondensiert,
- Einstellen der Temperatur (T_{H}) der Heizvorrichtung (3) derart, dass die Temperatur (T_{H}) der Heizvorrichtung (3) gleich der Anfangstemperatur (T_{A}) ist,
Anschliessend Einstellen der Temperatur (T_{H}) der Heizvorrichtung (3) auf eine vorbestimmte Dauertemperatur (T_{Dauer}) bei gleichzeitigem Nachführen des Druckes (P) entsprechend einer Siedekurve des vorgenannten Mediums (11), **dadurch gekennzeichnet, dass**
- der Druck (P) kontinuierlich erfasst und die Temperatur (T_{H}) der Heizvorrichtung (3) kontinuierlich entsprechend der Siedekurve eingestellt wird und/oder
- die Temperatur (T_{H}) der Heizvorrichtung (3) kontinuierlich erfasst und der Druck (P) entsprechend der Siedekurve kontinuierlich eingestellt werden,
- wobei kontinuierlich verdampft und kondensiert wird.

2. Verfahren nach Anspruch 1 **dadurch gekennzeichnet, dass**
- der Druck (P) in Abhängigkeit von der erfassten Temperatur (T_{H}) der Heizvorrichtung (3) und der Siedekurve des zu verdampfenden Mediums (11) und/oder
- die Temperatur (T_{H}) der Heizvorrichtung (3) in Abhängigkeit von einem erfassten Druck (P) und der Siedekurve des zu verdampfenden Mediums (11) eingestellt wird.

3. Verfahren nach einem der Ansprüche 1 oder 2 **dadurch gekennzeichnet, dass** die Temperatur (T_{K}) der Kühlvorrichtung (4) auf eine Temperatur eingestellt wird, die wenigstens um die definierte Temperaturdifferenz (ΔT) kleiner als die Temperatur der Heizvorrichtung (T_{H}) ist.

4. Verfahren nach einem der Ansprüche 1 bis 3, **dadurch gekennzeichnet, dass** die Temperatur (T_{K}) der Kühlvorrichtung (4) kontinuierlich erfasst und entsprechend wenigstens um die definierte Temperaturdifferenz (ΔT) kleiner als die Temperatur (T_{H}) der Heizvorrichtung (3) eingestellt wird.

5. Verdampfungssystem (1), insbesondere ein Rotationsverdampfer, umfassend
- einen Behälter (2) zur Aufnahme eines zu verdampfenden Mediums (11),
- eine Heizvorrichtung (3) zum Erwärmen des Behälters (2),
- eine Druckkontrollvorrichtung zum Erfassen und Einstellen eines Druckes (P) im Behälter (2),
- eine Kühlvorrichtung (4), insbesondere ein Flüssigkeitskühler, zum Kondensieren von verdampften Medien (11),
- eine Temperaturerfassungseinrichtung zum Erfassen einer Temperatur (T_{H}) der Heizvorrichtung (3),
- eine Temperaturerfassungseinrichtung zum Erfassen einer Temperatur (T_{K}) der Kühlvorrichtung (4),
- eine Steuerung (6) zum Einstellen der Temperatur (T_{H}) der Heizvorrichtung (3) und des Druckes (P) in Abhängigkeit einer Siedekurve des zu verdampfenden Mediums (11), **dadurch gekennzeichnet, dass** die Steuerung (6) derart ausgestaltet ist, dass
- der Druck (P) im Behälter (2) erfasst wird,
- der Druck (P) im Behälter (2) derart eingestellt wird, dass das Medium (11) bei einer Anfangstemperatur (T_{A}), die um eine vorbestimmte Temperaturdifferenz (ΔT) grösser als die Temperatur (T_{K}) der Kühlvorrichtung (4) ist, verdampft und vorzugsweise an der Kühlvorrichtung (4) kondensiert,
- die Temperatur (T_{H}) der Heizvorrichtung (3) derart eingestellt wird, dass die Temperatur (T_{H}) der Heizvorrichtung (3) gleich der Anfangstemperatur (T_{A}) ist,
- die Temperatur (T_{H}) der Heizvorrichtung (3) nach erreich der Anfangstemperatur (T_{A}) und eines Anfangsdruckes (P_{A}) auf eine vorbestimmte Dauertemperatur (T_{Dauer}) bei gleichzeitigem Nachführen des Druckes (P) entsprechend der Siedekurve des vorgenannten Mediums (11) eingestellt wird
- der Druck (P) kontinuierlich erfasst und die Temperatur (T_{H}) der Heizvorrichtung (3) kontinuierlich entsprechend der Siedekurve eingestellt wird und/oder
- die Temperatur (T_{H}) der Heizvorrichtung (3) kontinuierlich erfasst und der Druck (P) entsprechend der Siedekurve kontinuierlich eingestellt werden,
- wobei kontinuierlich verdampft und kondensiert wird.

6. Verdampfungssystem (1) nach Anspruch 5, **dadurch gekennzeichnet, dass** eine Steuerung (6) bereitgestellt ist, umfassend eine Benutzerschnittstelle (7) mit einer Möglichkeit zum Auswählen einer voreingestellten insbesondere abgespeicherten Siedekurve oder zur Eingabe einer Siedekurve.

7. Verdampfungssystem (1) nach einem der Ansprüche 5 oder 6
**dadurch gekennzeichnet, dass** die Steuerung derart ausgestaltet ist, dass bei Einschalten des Verdampfungssystems (1), die definierte Anfangstemperatur (T_{A}) als Temperatur (T_{H}) der Heizvorrichtung (3) eingestellt wird.

8. Verdampfungssystem (1) nach einem der Ansprüche 5 bis 7,
**dadurch gekennzeichnet, dass** ein oder mehrere Temperatursensoren zum Erfassen der Temperatur (T_{K}) an der Kühlvorrichtung (4), insbesondere an deren Ein- und/oder Ausgang, angeordnet sind.

9. Verdampfungssystem (1) nach einem der Ansprüche 5 bis 8,
**dadurch gekennzeichnet, dass** ein oder mehrere Drucksensoren zum Erfassen des Druckes (P) im Behälter (2) oder in einem mit dem Behälter (2) fluidisch verbundenen Bereich des Verdampfungssystems (1) angeordnet ist.

10. Verdampfungssystem (1) nach einem der Ansprüche 5 bis 9,
**dadurch gekennzeichnet, dass** im Verdampfungssystem (1) ein oder mehrere Temperatursensoren zum Erfassen der Temperatur des Mediums (11) angeordnet sind.

## Claims

1. Method for evaporating and condensing a medium with an evaporation system (1), in particular a rotary evaporator, comprising the steps of
- Providing a medium (11) to be vaporized in a container (2),
- Providing a heating device (3) for heating the medium (11) to be vaporized,
- Providing a pressure control device for detecting and setting a pressure (P) in the container (2),
- Providing a cooling device (4) for condensing vaporized media (11),
- Detection of a temperature (T_{H}) of the heating device (3) and a temperature (T_{K}) of the cooling device (4),
- Detection of the pressure (P) in the container (2),
- Adjusting the pressure (P) in the container (2) in such a way that the medium (11) evaporates at an initial temperature (T_{A}) which is greater than the temperature (T_{K}) of the cooling device (4) by a predetermined temperature difference (ΔT) and condenses on the cooling device (4),
- Setting the temperature (T_{H}) of the heating device (3) in such a way that the temperature (T_{H}) of the heating device (3) is equal to the initial temperature (T_{A}), Subsequent adjustment of the temperature (T_{H}) of the heating device (3) to a predetermined continuous temperature (T_{contin-uous}) with simultaneous tracking of the pressure (P) in accordance with a boiling curve of the aforementioned medium (11), **characterized in that**
- the pressure (P) is continuously recorded and the temperature (T_{H}) of the heating device (3) is continuously adjusted according to the boiling curve and/or
- the temperature (T_{H}) of the heating device (3) is continuously recorded and the pressure (P) is continuously adjusted according to the boiling curve,
- whereby evaporation and condensation take place continuously.

2. Method according to claim 1, **characterized in that**
- the pressure (P) is set as a function of the detected temperature (T_{H}) of the heating device (3) and the boiling curve of the medium (11) to be vaporized and/or
- the temperature (T_{H}) of the heating device (3) is set as a function of a detected pressure (P) and the boiling curve of the medium (11) to be vaporized.

3. Method according to one of claims 1 or 2, **characterized in that** the temperature (T_{K}) of the cooling device (4) is set to a temperature which is lower than the temperature of the heating device (T_{H}) by at least the defined temperature difference (ΔT).

4. Method according to one of claims 1 to 3, **characterized in that** the temperature (T_{K}) of the cooling device (4) is continuously detected and correspondingly set lower than the temperature (T_{H}) of the heating device (3) by at least the defined temperature difference (ΔT).

5. Evaporation system (1), in particular a rotary evaporator, comprising
- a container (2) for holding a medium (11) to be vaporized,
- a heating device (3) for heating the container (2),
- a pressure control device for detecting and setting a pressure (P) in the container (2),
- a cooling device (4), in particular a liquid cooler, for condensing vaporized media (11),
- a temperature detection device for detecting a temperature (T_{H}) of the heating device (3),
- a temperature detection device for detecting a temperature (T_{K}) of the cooling device (4),
- a control (6) for adjusting the temperature (T_{H}) of the heating device (3) and the pressure (P) as a function of a boiling curve of the medium (11) to be vaporized, **characterized in that** the control (6) is designed in such a way that
- the pressure (P) in the container (2) is detected,
- the pressure (P) in the container (2) is set in such a way that the medium (11) evaporates at an initial temperature (T_{A}) which is greater than the temperature (T_{K}) of the cooling device (4) by a predetermined temperature difference (ΔT) and preferably condenses on the cooling device (4),
- the temperature (T_{H}) of the heating device (3) is set in such a way that the temperature (T_{H}) of the heating device (3) is equal to the initial temperature (T_{A}),
- the temperature (T_{H}) of the heating device (3) is set to a predetermined continuous temperature (T_{continuous}) after reaching the initial temperature (T_{A}) and an initial pressure (P_{A}), with simultaneous tracking of the pressure (P) in accordance with the boiling curve of the aforementioned medium (11)
- the pressure (P) is continuously recorded and the temperature (T_{H}) of the heating device (3) is continuously adjusted according to the boiling curve and/or
- the temperature (T_{H}) of the heating device (3) is continuously recorded and the pressure (P) is continuously adjusted according to the boiling curve,
- whereby evaporation and condensation take place continuously.

6. Evaporation system (1) according to claim 5, **characterized in that** a control (6) is provided, comprising a user interface (7) with an option for selecting a preset, in particular stored, boiling curve or for entering a boiling curve.

7. Evaporation system (1) according to one of claims 5 or 6, **characterized in that** the control is designed in such a way that when the evaporation system (1) is switched on, the defined initial temperature (T_{A}) is set as the temperature (T_{H}) of the heating device (3).

8. Evaporation system (1) according to one of claims 5 to 7, **characterized in that** one or more temperature sensors for detecting the temperature (T_{K}) are arranged on the cooling device (4), in particular at its inlet and/or outlet.

9. Evaporation system (1) according to one of claims 5 to 8, **characterized in that** one or more pressure sensors for detecting the pressure (P) are arranged in the container (2) or in a region of the evaporation system (1) fluidically connected to the container (2).

10. Evaporation system (1) according to one of claims 5 to 9, **characterized in that** one or more temperature sensors for detecting the temperature of the medium (11) are arranged in the evaporation system (1).

## Revendications

1. Procédé d'évaporation et de condensation d'un fluide avec un système d'évaporation (1), en particulier un évaporateur rotatif, comprenant les étapes suivantes
- fournir un milieu (11) à vaporiser dans un récipient (2),
- fournir un dispositif de chauffage (3) pour chauffer le milieu à vaporiser (11),
- fournir un dispositif de contrôle de pression pour détecter et ajuster une pression (P) dans le récipient (2),
- fournir un dispositif de refroidissement (4) pour condenser les fluides vaporisés (11),
- détecter une température (T_{H}) du dispositif de chauffage (3) et une température (T_{K}) du dispositif de refroidissement (4),
- Détection de la pression (P) dans le récipient (2),
- régler la pression (P) dans le récipient (2) de telle sorte que le fluide (11) s'évapore à une température initiale (T_{A}) qui est supérieure d'une différence de température prédéterminée (ΔT) à la température (T_{K}) du dispositif de refroidissement (4) et se condense sur le dispositif de refroidissement (4),
- régler la température (T_{H}) du dispositif de chauffage (3) de telle sorte que la température (T_{H}) du dispositif de chauffage (3) soit égale à la température initiale (T_{A}),
ensuite, ajuster la température (T_{H}) du dispositif de chauffage (3) à une température permanente prédéterminée (T_{durée}) tout en maintenant la pression (P) conformément à une courbe d'ébullition du fluide précité (11), **caractérisé en ce que**
- la pression (P) est détectée en continu et la température (T_{H}) du dispositif de chauffage (3) est réglée en continu en fonction de la courbe d'ébullition et/ou
- la température (T_{H}) du dispositif de chauffage (3) est détectée en continu et la pression (P) est réglée en continu en fonction de la courbe d'ébullition,
- où l'évaporation et la condensation se font en continu.

2. Procédé selon la revendication 1, **caractérisé en ce que**
- la pression (P) est réglée en fonction de la température détectée (T_{H}) du dispositif de chauffage (3) et de la courbe d'ébullition du fluide à vaporiser (11) et/ou
- la température (T_{H}) du dispositif de chauffage (3) est réglée en fonction d'une pression détectée (P) et de la courbe d'ébullition du fluide à vaporiser (11).

3. Procédé selon l'une des revendications 1 ou 2 **caractérisé en ce que** la température (T_{K}) du dispositif de refroidissement (4) est réglée à une température qui est inférieure à la température du dispositif de chauffage (T_{H}) au moins de la différence de température définie (ΔT).

4. Procédé selon l'une des revendications 1 à 3, **caractérisé en ce que** la température (T_{K}) du dispositif de refroidissement (4) est détectée en continu et réglée en conséquence à une valeur inférieure à la température (T_{H}) du dispositif de chauffage (3) au moins de la différence de température définie (ΔT).

5. Système d'évaporation (1), en particulier un évaporateur rotatif, comprenant
- un récipient (2) destiné à recevoir un milieu à vaporiser (11),
- un dispositif de chauffage (3) pour chauffer le récipient (2),
- un dispositif de contrôle de pression pour détecter et régler une pression (P) dans le récipient (2),
- un dispositif de refroidissement (4), en particulier un refroidisseur de liquide, pour condenser les fluides vaporisés (11),
- un dispositif de détection de température pour détecter une température (T_{H}) du dispositif de chauffage (3),
- un dispositif de détection de température pour détecter une température (T_{K}) du dispositif de refroidissement (4),
- une commande (6) pour régler la température (T_{H}) du dispositif de chauffage (3) et la pression (P) en fonction d'une courbe d'ébullition du fluide à vaporiser (11), **caractérisé en ce que** la commande (6) est conçue de telle sorte que
- la pression (P) dans le récipient (2) est détectée,
- la pression (P) dans le récipient (2) est réglée de telle sorte que le fluide (11) s'évapore à une température initiale (T_{A}) qui est supérieure d'une différence de température prédéterminée (ΔT) à la température (T_{K}) du dispositif de refroidissement (4) et se condense de préférence sur le dispositif de refroidissement (4),
- la température (T_{H}) du dispositif de chauffage (3) est réglée de telle sorte que la température (T_{H}) du dispositif de chauffage (3) est égale à la température initiale (T_{A}),
- la température (T_{H}) du dispositif de chauffage (3) est réglée, après avoir atteint la température initiale (T_{A}) et une pression initiale (P_{A}), à une température de durée prédéterminée (T_{durée}) avec un suivi simultané de la pression (P) en fonction de la courbe d'ébullition du fluide (11) susmentionné
- la pression (P) est détectée en continu et la température (T_{H}) du dispositif de chauffage (3) est réglée en continu en fonction de la courbe d'ébullition et/ou
- la température (T_{H}) du dispositif de chauffage (3) est détectée en continu et la pression (P) est réglée en continu en fonction de la courbe d'ébullition,
- où l'évaporation et la condensation se font en continu.

6. Système d'évaporation (1) selon la revendication 5, **caractérisé en ce qu'**une commande (6) est prévue, comprenant une interface utilisateur (7) avec une possibilité de sélectionner une courbe d'ébullition préréglée, en particulier mémorisée, ou d'entrer une courbe d'ébullition.

7. Système d'évaporation (1) selon l'une des revendications 5 ou 6, **caractérisé en ce que** la commande est conçue de telle sorte que, lors de la mise en marche du système d'évaporation (1), la température initiale définie (T_{A}) est réglée comme température (T_{H}) du dispositif de chauffage (3).

8. Système d'évaporation (1) selon l'une des revendications 5 à 7, **caractérisé en ce qu'**un ou plusieurs capteurs de température pour détecter la température (T_{K}) sont disposés sur le dispositif de refroidissement (4), en particulier à son entrée et/ou à sa sortie.

9. Système d'évaporation (1) selon l'une des revendications 5 à 8, **caractérisé en ce qu'**un ou plusieurs capteurs de pression destinés à détecter la pression (P) sont disposés dans le récipient (2) ou dans une zone du système d'évaporation (1) reliée fluidiquement au récipient (2).

10. Système d'évaporation (1) selon l'une des revendications 5 à 9, **caractérisé en ce qu'**un ou plusieurs capteurs de température sont disposés dans le système d'évaporation (1) pour détecter la température du fluide (11).
